# EUROPEAN PATENT APPLICATION

(11) **EP 1 719 810 A1**
(43) Date of publication of application: **08.11.2006**
(21) Application number: 05719142.1
(22) Date of filing: 15.02.2005
(51) Int. Cl.: C09K 11/59, H01J 29/20, H01J 29/32, H01J 31/12

(54) **GREEN LIGHT-EMITTING PHOSPHOR FOR DISPLAYS AND FIELD-EMISSION DISPLAY USING SAME**

(30) Priority: 24.02.2004 JP 2004048178
(71) Applicant: KABUSHIKI KAISHA TOSHIBA, Tokyo 105-8001 (JP)
(72) Inventor: YOKOSAWA, Nobuyuki; c/o Intellectual Property, chome,Minato-ku Tokyo; 1058001 (JP); YAMAGUCHI, Kenichi; c/o Intellectual Property, chome,Minato-ku Tokyo; 1058001 (JP); ONO, Yuuki; c/o Intellectual Property Division,, Minato-ku Tokyo; 1058001 (JP); ITO, Takeo; /o Intellectual Property Division,, Minato-ku Tokyo; 1058001 (JP)
(74) Representative: HOFFMANN EITLE
(86) International application number: PCT/JP2005/002240
(87) International publication number: WO 2005/080528

(57) **Abstract**

A green light-emitting phosphor for a display emits green light when excited by an electron beam of an acceleration voltage of 15 kV or less and is composed of particles of a manganese-activated zinc silicate phosphor having an average particle size of 1.0 to 2.0 µm. A field-emission display, comprises a phosphor layer including a blue light-emitting phosphor layer, a green light-emitting phosphor layer and a red light-emitting phosphor layer, an electron emitting source which emits an electron beam having an acceleration voltage of 15 kV or less onto the phosphor layer to make it to emit light, and an envelope which vacuum-seals the electron emitting source and the phosphor layer, wherein the green light-emitting phosphor layer includes the green light-emitting phosphor composed of the manganese-activated zinc silicate phosphor having an average particle size of 1.0 to 2.0 µm.

## Description

### TECHNICAL FIELD

The present invention relates to a green light-emitting phosphor for a display and a field-emission display using the same.

### BACKGROUND ART

With the coming of a multimedia age, the display device which is to be a core device of a digital network is demanded to have a larger-sized screen, higher definition, and compatibility to various sources such as a computer.

In display devices, a field emission display (FED) including an electron emitting element such as a field-emission cold-cathode element has recently been under active research and development, as a large-screen, thin digital device capable of displaying various kinds of information with high precision and high definition.

The FED is based on the same basic display principle as that of a cathode ray tube (CRT) and excites the phosphor by an electron beam to emit light. But, the FED has an acceleration voltage (excitation voltage) of the electron beam of 3 to 15 kV lower in comparison with the CRT and has a high current density provided by the electron beam. Therefore, the study on the phosphor for the FED has not advanced sufficiently.

The FED is generally classified into two kinds, namely, a high-voltage FED with the excitation voltage of 5 kV to 15 kV and a low-voltage FED with excitation voltage lower than 5 kV, and a phosphor in the high-voltage FED is considered to have a light emitting property that is close to that of the CRT, but at present, sufficient knowledge has not been obtained on the light emitting property of the phosphor under high current density excitation.

It is conventionally known that as a green light-emitting phosphor for a high current density-excited FED, a manganese-activated zinc silicate phosphor (Zn₂SiO₄:Mn) has luminance characteristics having the same level or higher in comparison with that of a copper-activated zinc sulfide phosphor (ZnS:Cu) having the highest luminance for the CRT. (See, for example, Patent Document 1)

But, a manganese-activated phosphor including Zn₂SiO₄:Mn has a problem that its afterglow time is long. In this connection, it is known that the afterglow time can be decreased by increasing an amount of Mn to activate, but the afterglow time and the luminance are in a trade-off relation with each other, and there is a problem that the luminance lowers when the Mn concentration is increased. Therefore, it is important to decrease the afterglow time while suppressing the luminance of the manganese-activated zinc silicate phosphor from lowering.

Besides, in order to realize emission of light excelling in display characteristics such as color reproducibility with a high luminance, the FED is highly demanded to improve white luminance by enhancing luminance, color purity and the like of a green phosphor having especially a high luminous efficacy.
Patent Document 1: Japanese Patent No. 1093745

### SUMMARY OF THE INVENTION

The present invention has been made in view of the above circumstances and provides a green light-emitting phosphor, which is to be used for a display such as a field-emission display (FED) , with emission luminance enhanced and an afterglow time decreased. The invention also provides an FED that an electron beam for exciting a phosphor layer is provided with a high current density by using the green light-emitting phosphor, and display characteristics such as high luminance and color reproducibility are improved.

Generally, it is advantageous to have a phosphor formed of fine particles for a vacuum device FED in view of various points, but it was thought that such a manner was opposite to the demand for the provision of high luminance. In reality, when the zinc sulfide phosphor is excited by an electron beam, its luminance is lowered because the fine particles are used.

But, the present inventors have made devoted studies on the manganese-activated zinc silicate phosphor (Zn₂SiO₄:Mn) and found that the luminance is not lowered but improved by making the phosphor formed of fine particles. It has been also found that it becomes possible to increase an amount of manganese to activate for the provided portion of the high luminance realized by the improvement of the luminance as described above, and the afterglow time can be decreased accordingly. The present invention has been achieved according to the above knowledge.

The green light-emitting phosphor for a display of the present invention is a green light-emitting phosphor, comprising a manganese-activated zinc silicate phosphor and being excited by an electron beam whose acceleration voltage is 15 kV or less to emit green light, wherein the manganese-activated zinc silicate phosphor is composed of particles having an average particle size of 1.0 to 2.0 µm.

The field-emission display of the present invention comprises a phosphor layer including a blue light-emitting phosphor layer, a green light-emitting phosphor layer and a red light-emitting phosphor layer, an electron emitting source which emits an electron beam having an acceleration voltage of 15 kV or less onto the phosphor layer to make it to emit light, and an envelope which vacuum-seals the electron emitting source and the phosphor layer, wherein the green light-emitting phosphor layer includes the above-described green light-emitting phosphor for a display.

The green light-emitting phosphor of the present invention is formed of the fine particles of the manganese-activated zinc silicate phosphor having an average particle size of 1.0 to 2.0 µm, so that emission luminance when excited by an electron beam having an acceleration voltage of 15 kV or less is improved more than the manganese-activated zinc silicate phosphor having a larger particle size. And, an amount of manganese to activate in correspondence with the level of the realized high luminance can be increased, so that the afterglow time can also be decreased.

Forming the green light-emitting phosphor layer using such a phosphor enables to obtain a field-emission display (FED) having excellent display characteristics such as high luminance and color reproducibility.

### BRIEF DESCRIPTION OF THE DRAWINGS

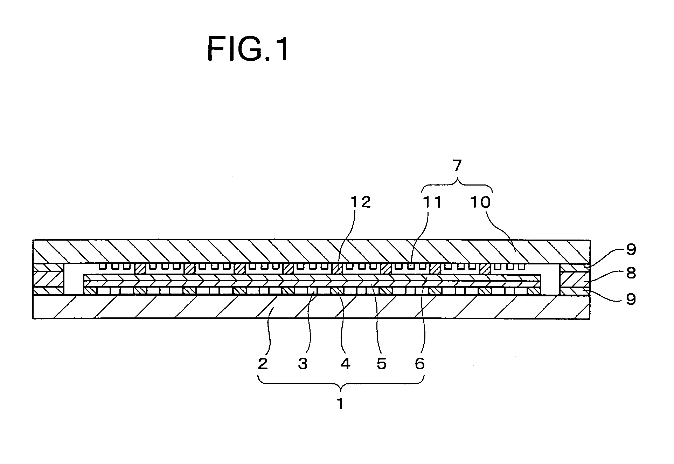

FIG. 1 is a sectional view schematically showing an FED of one embodiment of the present invention.

### BEST MODE FOR CARRYING OUT THE INVENTION

Preferable embodiments of the present invention will be described below. It should be noted that the present invention is not limited to the following embodiments.

A green light-emitting phosphor according to one embodiment of the present invention is a manganese-activated zinc silicate phosphor having a composition substantially expressed by a formula Zn₂SiO₄:Mn. It is desirable that an amount of Mn activator is preferably within a range from 1 to 13 mol% relative to the host material (Zn₂SiO₄) of the phosphor in order to obtain good emission chromaticity and high luminance as a green phosphor. Besides, in the range described above, a range (e.g., 2 mol% or more) that the amount of Mn is large is more desirable such that an afterglow time becomes 8 ms or less.

The manganese-activated zinc silicate phosphor is composed of fine particles having an average particle size d of 1.0 to 2.0 µm, and more preferably 1.0 to 1.5 µm. It should be noted that the average particle size d of the manganese-activated zinc silicate phosphor indicates a value measured by a penetration method (specifically, a Blaine method).

The average particle size d of the manganese-activated zinc silicate phosphor is limited to 1.0 µm or more, because it is hard to industrially produce the manganese-activated zinc silicate phosphor having an average particle size of less than 1.0 µm and sufficient luminance. And, the manganese-activated zinc silicate phosphor having an average particle size d of exceeding 2.0 µm is not desirable because it does not have sufficiently high emission luminance.

Besides, this manganese-activated zinc silicate phosphor is desired to have a 50% (wt%) D value of 2.0 to 3.0 µm in view of the particle size distribution. The 50 wt% D value of the particle size distribution indicates a diameter that a value of an integrated distribution in weight of the particle size becomes 50%. And, the manganese-activated zinc silicate phosphor of the embodiment is further desired that a ratio (50%D/d) of the 50%D value of the particle size distribution to the above-described average particle size d is 1.0 to 2.0.

If the ratio (50%D/d) of the 50%D value of the particle size distribution to the average particle size d exceeds 2.0, it is not desirable because denseness of the phosphor layer formed of the phosphor becomes poor, and a defect in light emitting point or uneven luminance (phenomenon that a difference in luminance occurs depending on light emitting points) of a display is generated.

The green light-emitting phosphor of this embodiment is suitable for a phosphor excited by an electron beam having an acceleration voltage of 15 kV or less. Specifically, it is suitable as the green light-emitting phosphor for a high-voltage type FED having an excitation voltage of 5 kV to 15 kV and a low-voltage type FED having an excitation voltage of less than 5 kV.

The manganese-activated zinc silicate phosphor composed of particles having an average particle size of 1.0 to 2.0 µm according to the embodiment of the present invention can be produced by, for example, a known baking method.

Specifically, prescribed amounts of individual material powders are weighed to have a desired composition (Zn₂SiO₄:Mn). They are sufficiently mixed together with a fusing agent by a ball mill or the like. The obtained material mixture is placed and baked in an alumina crucible at a temperature of 1200 to 1400°C for about 2 to 6 hours. The individual material powders are not limited to oxides, but carbonate, nitrate, oxalate, hydroxide or the like which can be decomposed easily to an oxide by heating can be used.

Then, the baked product is washed well with pure water (including hot pure water) to remove unnecessary soluble components. The washed baked product is filtered, dried, placed in an alumina crucible or the like and baked in a reducing atmosphere at a temperature of 1200 to 1500°C for about 2 to 6 hours. The baked product is then finely pulverized, washed with pure water to remove the unnecessary soluble components, further filtered and dried to obtain a manganese-activated zinc silicate phosphor having a target particle size.

By applying a sol-gel method, a manganese-activated zinc silicate phosphor having an average particle size of 1.0 to 2.0 µm can be obtained with a good reproducibility.

First, an aqueous solution containing a water-soluble manganese compound and a water-soluble zinc compound at a prescribed ratio is prepared. Specifically, water-soluble compounds of chloride or nitrate of Mn and chloride or nitrate of Zn which easily generate Mn ions and Zn ions in water are weighed for prescribed amounts to satisfy a composition formula Zn₂SiO₄:Mn (Mn amount is 2 mol% or more with respect to, for example, host material of the phosphor) , and they are put into pure water which is heated to about 60 to 80°C and dissolved by stirring.

Next, for example, NH₄OH or NaOH is added to the above solution to adjust the Mn ion- and Zn ion-containing solution to a pH in a range of 6 to 9, thereby preparing hydroxides of Zn (OH)₂ and Mn(OH)₂. An alkoxide compound of silicon weighed according to the above-described composition formula, for example, ethyl silicate (tetraethoxysilane Si(OC₂H₅)₄) is then added, and stirring is performed for 2 to 3 hours. Thus, Zn₂SiO₄:Mn is prepared by hydrolyzing ethyl silicate on the surface of the hydroxide of Zn and Mn.

Then, the Zn₂SiO₄:Mn-containing solution is washed, filtered and dried. The dried product is baked in a reducing atmosphere under conditions of, for example, 800 to 1100°C and 3 to 6 hours, and a manganese-activated zinc silicate phosphor of fine particles having an average primary particle size of 1.0 to 2.0 µm can be obtained with a good reproducibility.

In the embodiment of the present invention, luminance can be improved since the average particle size of the manganese-activated zinc silicate phosphor is decreased to 1.0 to 2.0 µm, so that the afterglow time can be decreased while keeping high luminance. And, the provision of the high luminance and the short afterglow time is particularly effective when excited by an electron beam at an acceleration voltage of 15 kV or less and a high current density.

In addition, the manganese-activated zinc silicate phosphor formed into the fine particles improves luminance of the powder and provides a high density (denseness) of the phosphor-containing emitting layer, so that it becomes possible to improve furthermore the emission luminance of the green phosphor layer. And, the improvement of the emission luminance can be obtained particularly effectively when excited by an electron beam at an acceleration voltage of 15 kV or less and a high current density.

To form the phosphor layer using the green light-emitting phosphor according to the embodiment of the invention, a known slurry method or printing method can be used. In the slurry method, a phosphor slurry is prepared by mixing the powder of the green light-emitting phosphor with pure water, polyvinyl alcohol, a photosensitive material such as ammonium dichromate, and a surfactant and the like. The slurry is coated and dried by a spin coater or the like, and exposed to ultraviolet rays or the like to expose and develop a prescribed pattern. The obtained phosphor pattern is dried to form a green light-emitting phosphor layer.

Next, a field-emission display (FED) that has a green phosphor layer formed by using the green light-emitting phosphor according to the embodiment of the invention will be described.

Fig. 1 is a sectional view showing a main portion of one embodiment of the FED. In Fig. 1, reference numeral 1 denotes a face plate, which has a phosphor layer 3 formed on a transparent substrate such as a glass substrate 2. The phosphor layer 3 has a blue light-emitting phosphor layer, a green light-emitting phosphor layer and a red light-emitting phosphor layer which are formed in correspondence with pixels, and these phosphor layers are separated from one another by light- absorbing layers 4 comprised of a black conductive material. Of the phosphor layers of the respective colors constituting the phosphor layer 3, the green light- emitting phosphor layer is constituted by the green light emitting phosphor of the above-described embodiment.

The green light-emitting phosphor layer desirably has a thickness of 1 to 10 µm, and more desirably 3 to 7 µm. The green light-emitting phosphor layer is limited to the thickness of 1 µm or more, because it is hard to form a phosphor layer having a thickness of less than 1 µm with the phosphor particles arranged uniformly. And, if the thickness of the green light-emitting phosphor layer exceeds 10 µm, the emission luminance lowers and it is unpraticable.

The blue light-emitting phosphor layer and the red light-emitting phosphor layer each can be composed of a known phosphor. To make no difference in level among the individual color phosphor layers, the blue light-emitting phosphor layer and the red light-emitting phosphor layer are desirably formed to have the same thickness as that of the green light-emitting phosphor layer.

The above described blue light-emitting phosphor layer, green light-emitting phosphor layer and red light-emitting phosphor layer and the light-absorbing layer 4 which divides them are repeatedly formed sequentially in the horizontal direction, and the portion where the phosphor layer 3 and the light-absorbing layer 4 are present is an image display region. For arrangement of the phosphor layer 3 and the light-absorbing layer 4, a variety of patterns such as a dot pattern, a stripe pattern and the like can be applied.

A metal back layer 5 is formed on the phosphor layer 3. The metal back layer 5 is formed of a metal film such as an Al film and improves luminance by reflecting light advancing toward a rear plate to be described later in the light emitted from the phosphor layer 3. And, the metal back layer 5 has a function to prevent an electric charge from being accumulated by providing the image display region of the face plate 1 with electrical conductivity and serves as an anode electrode for the electron emitting source of the rear plate. Besides, the metal back layer 5 has a function to prevent the phosphor layer 3 from being damaged by ions generated when the gas remained in the face plate 1 or the vacuum vessel (envelope) is ionized by the electron beam.

A getter film 6, which is comprised of an evaporative getter material of Ba or the like, is formed on the metal back layer 5. The getter film 6 adsorbs efficiently the gas generated at the time of use.

The face plate 1 and a rear plate 7 are disposed to face each other, and the gap between them is sealed airtight with a support frame 8 intervened. The support frame 8 is bonded to the face plate 1 and the rear plate 7 with a bonding member 9 comprised of a frit glass, In or its alloy, and the vacuum vessel as the envelope is configured of the face plate 1, the rear plate 7 and the support frame 8.

The rear plate 7 has a substrate 10 such as an insulating substrate, for example a glass substrate or a ceramics substrate, or an Si substrate and a lot of electron emission elements 11 formed on the substrate 10. These electron emission elements 11 include, for example, field-emission cold cathodes, surface conduction type electron emitting elements, and so on, and not-shown wiring is formed on a surface of the rear plate 7 on which the electron emitting elements 11 are formed. Specifically, a large number of the electron emitting elements 11 are arranged in a matrix so as to correspond to the phosphors of the respective pixels, and have the wiring lines (X-Y wiring lines) intersecting one another for driving, row by row, the electron emitting elements 11 arranged in a matrix. Incidentally, the support frame 8 has not-shown signal input terminals and row selection terminals. These terminals correspond to the aforesaid intersecting wiring lines (X-Y wiring lines) of the rear plate 7. When a flat FED is increased in size, deflection may possibly occur due to its thin plat shape. In order to prevent such deflection and to give strength against the atmosphere, a reinforcing member (atmosphere supporting member, a spacer) 12 may be appropriately disposed between the face plate 1 and the rear plate 7.

In the color FED configured as described above, the green light-emitting phosphor of the above embodiment is used as a green light-emitting phosphor layer which emits light by the emission of the electron beam, so that display characteristics such as initial luminance (white luminance) and color reproducibility are improved.

### EXAMPLES

Specific examples of the present invention will be described below.

### Examples 1 through 6

A manganese-activated zinc silicate phosphor (Zn₂SiO₄:Mn) having an average particle size d and a particle size distribution of a 50%D value shown in Table 1 and an activated amount of Mn adjusted was used, and a phosphor layer was formed on a glass substrate. A ratio (50%D/d) of the 50%D value to and the average particle size d is also indicated in Table 1.

The phosphor layer was formed by dispersing each phosphor into a solution containing polyvinyl alcohol and the like to prepare slurry and coating the slurry on the glass substrate by a spin coater. Each phosphor layer was adjusted to the thickness indicated in Table 1 by adjusting a rotation speed of the spin coater and a viscosity of the slurry.

As Comparative Examples 1 and 2, manganese-activated zinc silicate phosphors having a large average particle size d of 5.5 µm and a long and short afterglow times were used to form phosphor layers having a thickness of 10 µm on the glass substrate in the same way as in Examples 1 through 6.

Then, the phosphor layers were examined for emission luminance, emission chromaticity and afterglow time. The emission luminance was measured by emitting an electron beam onto each phosphor layer at an acceleration voltage of 10 kV and a current density of 2 × 10⁻⁵ A/mm². And, the each emission luminance was determined as a relative value with the luminance of the phosphor layer of Comparative Example 1 determined as 100%.

The emission chromaticity was measured by using as a chromaticity measuring device an MCPD-1000 produced by Otsuka Electronics Co., Ltd. The emission chromaticity was measured in a dark room where emission chromaticity was not affected from outside. The afterglow time was determined as a time period in which the luminance after cutting the electron beam became 1/10 of that immediately before the electron beam was cut off. The measured results are shown in Table 1.

**[Table 1]**

| | Examples | | | | | | Comparative Examples | |
|---|---|---|---|---|---|---|---|---|
| | 1 | 2 | 3 | 4 | 5 | 6 | 1 | 2 |
| Average particle size d(µm) | 1.5 | 1.5 | 1.5 | 2.0 | 2.0 | 1.5 | 5.5 | 5.5 |
| 50%D (µm) | 2.3 | 2.4 | 2.3 | 3.4 | 3.5 | 2.3 | 7.3 | 7.5 |
| 50%D/d | 1.5 | 1.6 | 1.5 | 1.7 | 1.8 | 1.5 | 1.3 | 1.4 |
| Phosphor layer thickness(µm) | 10 | 7 | 3 | 10 | 7 | 10 | 10 | 10 |
| Emission luminance(%) | 110 | 132 | 120 | 110 | 107 | 115 | 100 | 130 |
| Emission chromaticity (x,y) | 0.26,0.71 | 0.26,0.71 | 0.26,0.71 | 0.26,0.70 | 0.26,0.70 | 0.26,0.70 | 0.26,0.70 | 0.22,0.72 |
| After glow time(ms) | 8 | 8 | 8 | 8 | 8 | 6 | 8 | 15 |

It is apparent from Table 1 that the green light-emitting phosphors obtained in Examples 1 to 6 have a high emission luminance and a short afterglow time when the electron beam is emitted at a low acceleration voltage (15 kV or less) and a high current density, and are excellent in properties of both luminance and afterglow time. The green light-emitting phosphors also have good emission chromaticity. Meanwhile, the green light-emitting phosphor of Comparative Example 1 has a short afterglow time, but emission luminance is lower than in Examples 1 to 6, and high luminance is insufficient. It is also found that the green light-emitting phosphor of Comparative Example 2 has a high emission luminance, but the afterglow time is long, and the emission property is inferior in comparison with those in Examples 1 to 6.

### Example 7

The green light-emitting phosphor obtained in Example 1, a blue light-emitting phosphor (ZnS:Ag, Al phosphor), and a red light-emitting phosphor (Y₂O₂S:Eu phosphor) were used to form a phosphor layer on the glass substrate to prepare a face plate. The face plate and a rear plate having a lot of electron emission elements were assembled with a support frame, and the gap between them was sealed airtight by evacuating. It was confirmed that the FED obtained by the above procedure excels in color reproducibility and shows good display characteristics even after operating by a rated operation at normal temperature for 1000 hours.

### INDUSTRIAL APPLICABILITY

According to the green light-emitting phosphor of the present invention, it is possible to realize emission of green light with a short afterglow time and high luminance for an FED or the like by emitting an electron beam at a low voltage and a high current density. And, this phosphor can be used to form the green light-emitting phosphor layer, thereby obtaining an FED having improved display characteristics such as high luminance and color reproducibility.

## Claims

1. A green light-emitting phosphor for a display, comprising a manganese-activated zinc silicate phosphor and being excited by an electron beam whose acceleration voltage is 15 kV or less to emit green light,
wherein the manganese-activated zinc silicate phosphor is composed of particles having an average particle size of 1.0 to 2.0 µm.

2. The green light-emitting phosphor for a display as set forth in claim 1, wherein a 50%D value of a particle size distribution that a weight-integrated distribution of a particle size of the manganese-activated zinc silicate phosphor is 50%, is 2.0 to 3.0 µm.

3. The green light-emitting phosphor for a display as set forth in claim 2, wherein a ratio of the 50%D value of the particle size distribution to the average particle size of the manganese-activated zinc silicate phosphor is 1.0 to 2.0.

4. The green light-emitting phosphor for a display as set forth in any one of claims 1 through 3, wherein the manganese-activated zinc silicate phosphor has an afterglow time of 8 ms or less.

5. A field-emission display, comprising:
a phosphor layer including a blue light-emitting phosphor layer, a green light-emitting phosphor layer and a red light-emitting phosphor layer;
an electron emitting source which emits an electron beam having an acceleration voltage of 15 kV or less onto the phosphor layer to make it to emit light; and
an envelope which vacuum-seals the electron emitting source and the phosphor layer,
wherein the green light-emitting phosphor layer includes the green light-emitting phosphor for a display as set forth in any one of claims 1 to 4.
6. The field-emission display as set forth in claim 5, wherein the green light-emitting phosphor layer has a thickness of 1 to 10 µm.
